(19) Europäisches Patentamt
European Patent Office
Office européen des brevets

(11) EP 3 309 777 A1

(12) EUROPEAN PATENT APPLICATION

(43) Date of publication:
18.04.2018 Bulletin 2018/16

(51) Int Cl.:
G10L 15/02 (2006.01)        G10L 25/03 (2013.01)
G06F 17/30 (2006.01)

(21) Application number: 16306350.6

(22) Date of filing: 13.10.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Thomson Licensing
92130 Issy-les-Moulineaux (FR)

(72) Inventors:
• GILBERTON, Philippe
  35576 Cesson Sévigné (FR)
• KITIC, Srdan
  35576 Cesson Sévigné (FR)

(74) Representative: Ståhl, Björn Niclas
TECHNICOLOR
1-5, rue Jeanne d'Arc
92130 Issy-les-Moulineaux (FR)

(54) DEVICE AND METHOD FOR AUDIO FRAME PROCESSING

(57) A device (200) and method for calculating scattering features for audio signal recognition. An interface (240) receives an audio signal that is processed (S610) by a processor (210) to obtain an audio frame. The processor (210) calculates (S620) a first order scattering features from at least one audio frame and then calculates (S630) for the first order scattering features an estimation of whether the first order scattering features comprises sufficient information for accurate audio signal recognition. The processor (240) calculates (S650) a second order scattering features from the first order scattering features only in case the first order scattering features does not comprise sufficient information for accurate audio signal recognition. As second order features are calculated only when it is deemed necessary, less processing power can be used by the device, which can lead to less power used by the device.

| | |
|---|---|
| S605 | Receive audio signal |
| S610 | Obtain audio frame |
| S620 | Calculate 1st order scattering features |
| S630 | Calculate energy preservation estimator $\beta$ |
| S640 | $\beta \geq$ threshold? |
| S650 | 2nd order scattering features calculation |
| S660 | Audio classification |

Figure 6

**Description**

TECHNICAL FIELD

The present disclosure relates generally to audio recognition and in particular to calculation of audio recognition features.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Audio (acoustic, sound) recognition is particularly suitable for monitoring people activity as it is relatively non-intrusive, does not require other detectors than microphones and is relatively accurate. However, it is also a challenging task that in order to be successful often requires intensive computing operations.

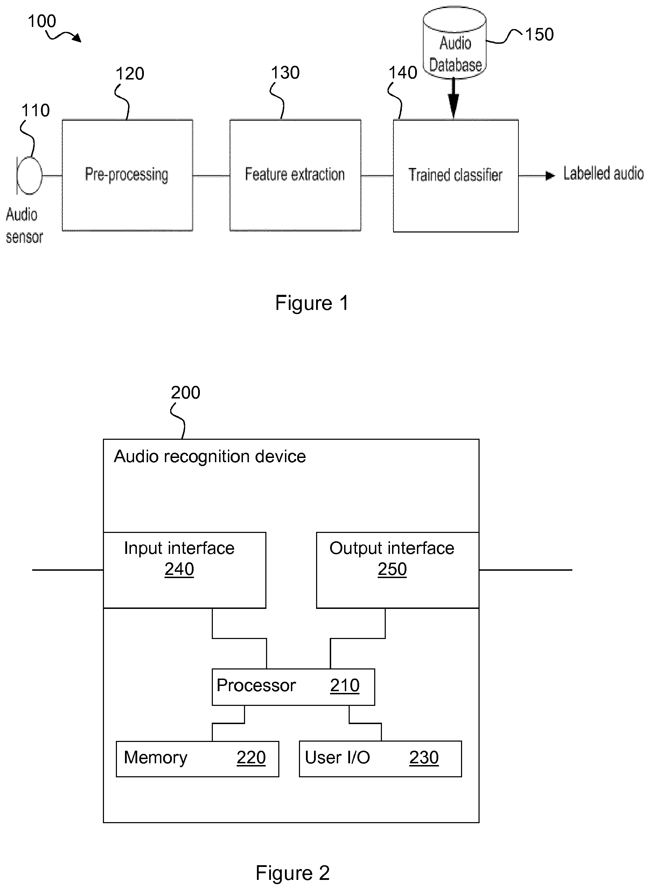

Figure 1 illustrates a generic conventional audio classification pipeline 100 that comprises an audio sensor 110 capturing a raw audio signal, a pre-processing module 120 that prepares the captured audio for a features extraction module 130 that outputs extracted features (i.e., signature coefficients) to a classifier module 140 that uses entries in an audio database 150 to label audio that is then output.

A principle constraint for user acceptance of audio recognition is preservation of privacy. Therefore, the audio processing should, preferably, be performed locally, instead of using a cloud service. As a consequence, CPU consumption and, in some cases, battery life could be a serious limitation to the deployment of such service in portable devices.

An opposing constraint is technical: many distinct audio events have very similar characteristics requiring cumbersome processing power to extract the features that enable discrimination between them. Recognition could be enhanced by exploiting fine time-frequency characteristics of an audio signal, however, at an increased computational cost. Indeed, among the functions composing the audio recognition, features extraction is the most demanding. It corresponds to computation of certain signature coefficients per audio frame (buffer), which characterize the audio signal over time, frequency or both.

Particularly efficient features for audio recognition, able to achieve high recognition accuracy, have been provided by Andén and Mallat, see

- J. Andén and S. Mallat: "Multiscale Scattering for Audio Classification." ISMIR - International Society for Music Information Retrieval conference. 2011.
- J. Andén and S. Mallat: "Deep Scattering Spectrum", IEEE Transactions on Signal Processing, 2014.

Their method has been theoretically and empirically verified as superior to baseline methods commonly used for acoustic classification, such as Mel Frequency Cepstral Coefficients (MFCC), see P. Atrey, M. Namunu, and K. Mohan, "Audio based event detection for multimedia surveillance" ICASSP - IEEE International Conference on Acoustics, Speech and Signal Processing, 2006. and D. Stowell, D. Giannoulis, E. Benetos, M. Lagrange and M. Plumbley, "Detection and classification of acoustic scenes and events" IEEE Transactions on Multimedia, 2015.

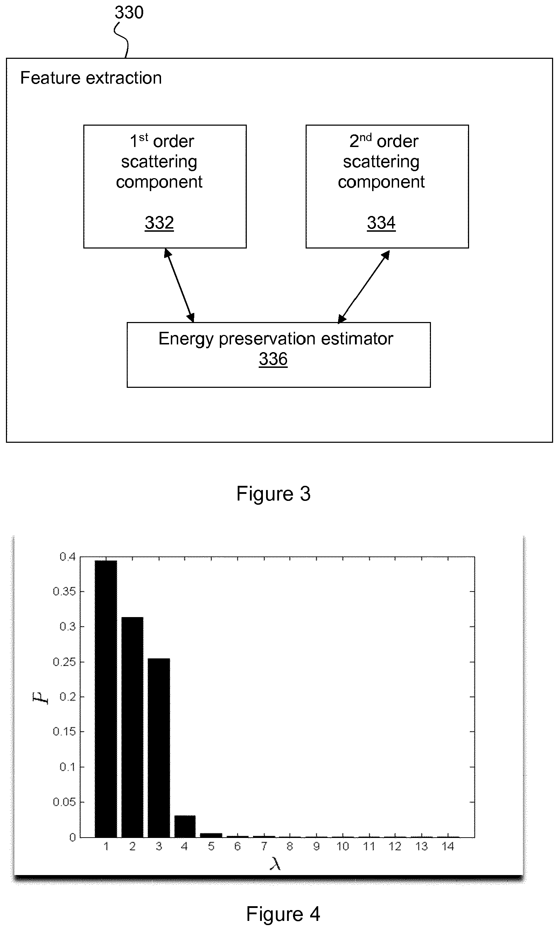

Their method comprises the computation of scattering features. First, from the captured raw audio signal, a frame (an audio buffer of fixed duration), denoted by x, is obtained. This frame is convolved with a complex wavelet filter bank, comprising bandpass filters $\psi_\lambda$ ($\lambda$ denoting the central frequency index of a given filter) and a low-pass filter $\phi$, designed such that the entire frequency spectrum is covered. Then, a modulus operator ($| \cdot |$) is applied, which pushes the energy towards lower frequencies [see S. Mallat: "Group invariant scattering." Communications on Pure and Applied Mathematics, 2012]. The low pass portion of this generated set of coefficients, obtained after the application of modulus operator, is stored and labelled as "0th order" scattering features ($S_0$). For computing the higher "scattering order" coefficients ($S_1, S_2, ...$), these operations are recursively applied to all *remaining* sequences of coefficients generated by bandpass filters. This effectively yields a tree-like representation, as illustrated in Figure 4 of "Deep Scattering Spectrum." As can be seen, the computational cost grows quickly with the increase of scattering order. Put another way, the method's discriminative power generally increases with the scattering order. While a higher scattering order usually leads to better classification, it also requires more exhaustive features computation and, consequently, higher computational load, which in some cases leads to higher battery consumption.

It will be appreciated that there is a desire for a solution that addresses at least some of the shortcomings of the conventional solutions. The present principles provide such a solution.

SUMMARY OF DISCLOSURE

In a first aspect, the present principles are directed to a device for calculating scattering features for audio signal recognition. The device comprises an interface configured to receive an audio signal and a processor configured to process the audio signal to obtain audio frames, calculate first order scattering features from at least one audio frame, calculate for the first order scattering features an estimation of whether the first order scattering features comprises sufficient information for accurate audio signal recognition, and calculate second order scattering features from the first order scattering features only in case the first order scattering features do not comprise sufficient information for accurate audio signal recognition.

Various embodiments of the first aspect include:

- That the processor is further configured to perform audio classification based on only the first order scattering features in case the first order scattering features comprise sufficient information for accurate audio signal recognition. The processor can further be configured to perform audio classification based on the first order scattering features at least the second order scattering features in case the first order scattering features do not comprise sufficient information for accurate audio signal recognition.
- That the processor is further configured to calculate the estimation by determining whether minimal energy in frequency bands, deemed important by a relevance map, exceeds a given threshold. The lowest possible value for the threshold can be 0 and the highest possible value can be 1, with the threshold lying between 0.7 and 0.9.
- That the processor is configured to calculate iteratively higher order scattering coefficients from scattering coefficients of an immediately lower order until the calculated set of scattering features comprise sufficient information for accurate audio signal recognition.

In a second aspect, the present principles are directed to a method for calculating scattering features for audio signal recognition. An interface receives an audio signal, a processor processes the audio signal to obtain at least one audio frame, calculates first order scattering features from the at least one audio frame, calculates for the first order scattering features an estimation of whether the first order scattering features comprises sufficient information for accurate audio signal recognition, and calculates second order scattering features from the first order scattering features only in case the first order scattering features does not comprise sufficient information for accurate audio signal recognition.

Various embodiments of the second aspect include:

- That the method further comprises performing audio classification based on only the first order scattering features in case the first order scattering features comprise sufficient information for accurate audio signal recognition. In addition, the method can further comprise performing audio classification based on the first and second order scattering features in case the first order scattering features do not comprise sufficient information for accurate audio signal recognition.

- That the estimation is calculated by determining whether minimal energy in frequency bands, deemed important by a relevance map, exceeds a given threshold. The lowest possible value for the threshold can be 0 and the highest possible value can be 1, with the threshold lying between 0.7 and 0.9.
- That the method further comprises calculating iteratively higher order scattering coefficients from scattering coefficients of an immediately lower order until the calculated set of scattering features comprise sufficient information for accurate audio signal recognition

In a third aspect, the present principles are directed to a computer program comprising program code instructions executable by a processor for implementing the method according to the second aspect.

In a fourth aspect, the present principles are directed to a computer program product which is stored on a non-transitory computer readable medium and comprises program code instructions executable by a processor for implementing the method according to the second aspect.

BRIEF DESCRIPTION OF DRAWINGS

Preferred features of the present principles will now be described, by way of non-limiting example, with reference to the accompanying drawings, in which:

Figure 1 illustrates a generic conventional audio classification pipeline;
Figure 2 illustrates a device for audio recognition according to the present principles;
Figure 3 illustrates the feature extraction module of the acoustic classification pipeline of the present principles;
Figure 4 illustrates a relevance map of exemplary first order coefficients;
Figure 5 illustrates precision/recall curve for an example performance; and
Figure 6 illustrates a flowchart for a method of audio recognition according to the present principles.

DESCRIPTION OF EMBODIMENTS

An idea underpinning the present principles is to reduce adaptively the computational complexity of audio event recognition by including a feature extraction module adaptive to the time varying behaviour of audio signal, which is computed on a fixed frame of an audio track and represents a classifier-independent estimate of belief in the classification performance of a given set of scattering features. Through the use of the metric, the order of a scattering transform can be optimized.

The present principles preferably use the "scattering transform" described hereinbefore as an effective feature extractor. As shown in Figure 2 of "Multiscale Scattering for Audio Classification," first order scattering features computed from scattering transform are very similar to traditional MFCC features. However, for the scattering features enriched by the second order coefficients, the classification error may significantly decrease. The advantage of using a higher-order scattering transform is its ability to recover missing fast temporal variations of an acoustic signal that are averaged out by the MFCC computation. For example, as argued in "Multiscale Scattering for Audio Classification," the discriminative power of the (enriched) second order scattering features comes from the fact that they depend on the higher order statistical moments (up to the 4th), as opposed to the first order coefficients that are relevant only up to the second order moments. However, some types of signals may be well-represented even with scattering transform of a lower order, which is assumed to be the result of their predominantly low bandwidth content. Therefore, by detecting this property, it can implicitly be concluded that the computed features (i.e., lower order features) are sufficient for an accurate classification of an audio signal.

It can thus be seen that the present principles can achieve possibly significant processing power savings if the scattering order is chosen adaptively per frame with respect to the observed time varying behaviour of an audio signal.

Figure 2 illustrates a device for audio recognition 200 according to the present principles. The device 200 comprises at least one hardware processing unit ("processor") 210 configured to execute instructions of a first software program and to process audio for recognition, as will be further described hereinafter. The device 200 further comprises at least one memory 220 (for example ROM, RAM and Flash or a combination thereof) configured to store the software program and data required to process outgoing packets. The device 200 also comprises at least one user communications interface ("User I/O") 230 for interfacing with a user.

The device 200 further comprises an input interface 240 and an output interface 250. The input interface 240 is configured to obtain audio for processing; the input interface 240 can be adapted to capture audio, for example a microphone, but it can also be an interface adapted to receive captured audio. The output interface 250 is configured to output information about analysed audio, for example for presentation on a screen or by transfer to a further device.

The device 200 is preferably implemented as a single device, but its functionality can also be distributed over a plurality of devices.

Figure 3 illustrates the feature extraction module 330 of the audio classification pipeline of the present principles. The feature extraction module 330 comprises a first sub-module 332 for calculation of the first order scattering features, a second sub-module 334 for calculation of the second order scattering features, as in the conventional feature extraction module 130 illustrated in Figure 1. In addition, the feature extraction module 330 also comprises an energy preservation estimator to decide the minimal necessary order of a scattering transform, as will be further described hereinafter.

In "Group Invariant Scattering," S. Mallat argues that the energy of the scattering representation approaches the energy of the input signal as the scattering order increases. The present principles use this property as a proxy indicator for the information content (thus discriminative performance) of a scattering representation.

It is assumed that there exists a pool of pre-trained classifiers based on the scattering features of different orders. Therefore, once the necessary scattering order for a given audio frame has been estimated, and the corresponding features have been computed, classification is performed using an appropriate model. The classification is an operation of a fairly low computational complexity.

In the description hereinafter, the expression "signal" is to be interpreted as any sequence of coeffi-

$$U_\lambda^m = |\psi_{\lambda_m} * | \dots ||$$

cients obtained from the parent node of the preceding scattering order $m \geq 0$, excluding the low pass portion. The $m = 0$ sequence is thus the audio signal itself. Since different signals contain energy in different frequency bands, the important bands are first marked by computing the *relevance map,* i.e. the normalized energy of a signal filtered by each bandpass filter $\psi_i$:

$$\gamma_\lambda = \frac{\|U_\lambda^m\|^2}{\sum_\epsilon \|U_\epsilon^m\|^2}$$

The resulting sequence of positive numbers $\{\gamma_\lambda\}$ adds up to 1. The larger values of $\gamma_\lambda$ indicate more important frequency bands, and can be seen as peaks of a probability mass function $P$ that models the likelihood of observing the signal energy in a given band. An example of such probability mass function is illustrated in Figure 4, which shows a relevance map of exemplary first order coefficients. As can be seen, several frequency bands, the ones to the left, are considered the most relevant.

As mentioned previously, the low-pass filter $\phi$

is applied to each signal $U_\lambda^m$, limiting its frequency range. This also limits the information content of the filtered signal. According to the present principles, the relative energy preserved by the low-pass filtered $\phi * U_\lambda^m$ relative to the input signal is measured:

$$\alpha_\lambda = \frac{\|\phi * U_\lambda^m\|^2}{\|U_\lambda^m\|^2}$$

For a normalized filter $\phi$, this ratio is necessarily bounded between 0 and 1, and indicates the preservation of energy for a given frequency band: the larger the ratio, the larger the amount of energy is captured within the given features.

According to the present principles, energy preservation is monitored only in "important" frequency bands, which are estimated using the relevance map. First, the normalised energies $\{\gamma_\lambda\}$ are sorted in descending order (Figure 4 shows the relevance map after sorting). Then, the first $n$ frequency bands whose cumulative sum of $\gamma_\lambda$ reaches a threshold $\mu$ - i.e.,

$$n = \mathrm{argmin}_n \sum_{\epsilon=1}^n \gamma_\epsilon \geq \mu -$$

are deemed "important". In other words, the user-defined threshold value $0 < \mu \leq 1$ implicitly parametrizes the number of important frequency bands; the lower the value of the threshold $\mu$, the fewer frequency bands are deemed important.

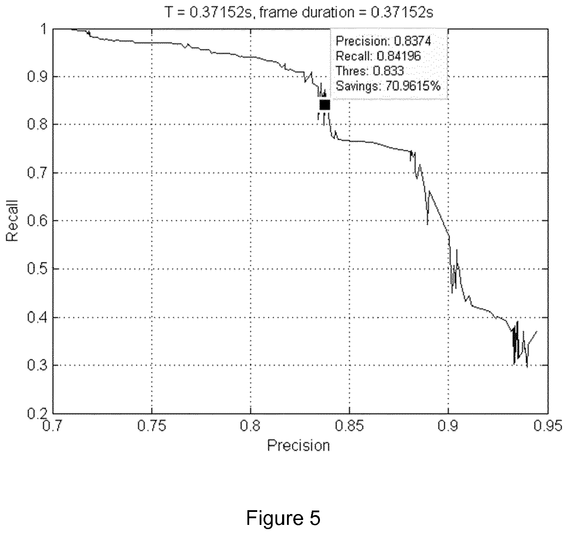

Then, the final energy preservation estimator is computed as $\beta = \min_{\epsilon \in [1,n]} \alpha_\epsilon$, where $\{\alpha_\lambda\}$ are ordered according to the descending order of $\{\gamma_\lambda\}$, and $0 < \beta \leq 1$ is the minimal relative amount of energy in the important frequency bands. By setting the low threshold $\tau$ or $\beta$, it is possible to determine whether a given scattering feature contains sufficient information for accurate classification, or if features of a higher scattering order need to be computed. In the inventors' experiments, the best performance has been obtained for $0.5 \leq \tau \leq 0.85$ and $0.7 \leq \mu \leq 0.9$. An example performance is presented in the precision/recall curve illustrated in Figure 5 where the "computational savings" quantity is the percentage of cases when the first order scattering is estimated as sufficient (and thus no second order coefficients needed to be computed) with respect to the total number of audio frames considered. It should be noted that this is an exemplary value that may differ from one setting to another (e.g. as a function of at least one of the threshold value $\mu$ and the type of audio signal).

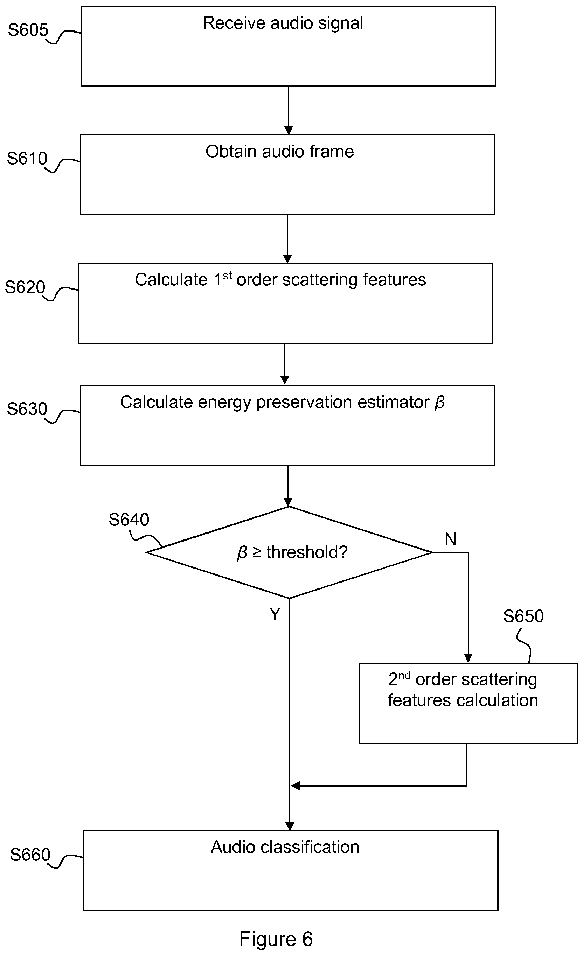

Figure 6 illustrates a flowchart for a method of audio recognition according to the present principles. While the illustrated method uses first and second order scattering features, it will be appreciated that the method readily extends to higher orders to decide if the features of scattering order m-1 are sufficient or if it is necessary to calculate the m$^{th}$ order scattering features.

In step S605, the interface (240 in Figure 2) receives an audio signal. In step S610, the processor (210 in Figure 2) obtains an audio frame calculated from the audio signal and output by the pre-processing (120 in Figure 1). It is noted that the pre-processing can be performed in the processor. In step S620, the processor calculates the first order scattering features in the conventional way. In step S630, the processor calculates the energy preservation estimator $\beta$, as previously described. In step S640, the processor determines if the energy preservation estimator $\beta$ is greater than or equal to the low threshold $\tau$ (naturally, strictly greater than is also possible). In case the energy preservation estimator $\beta$ is lower than the low threshold $\tau$, the processor calculates the corresponding second order scattering features in step S650; otherwise, the calculation of the second order scattering features is not performed. Finally, the processor performs audio classification in step S660 using at least one of the first order scattering features and the second order scattering features if these have been calculated.

The skilled person will appreciate that the energy preservation estimate is a classifier-independent metric. However, if the classifier is specified in advance and provides certain confidence metric (e.g., a class probability estimate), it is possible to consider the estimates together in an attempt to boost performance.

It will be appreciated that the present principles can provide a solution for audio recognition that can enable:

- CPU resource savings, especially for platforms with limited resources such as portable devices or residential gateways by enabling the use of state-of-the-art scattering features at low computational cost.
- Extension of battery life and optimized battery life duration for embedded systems in mobile devices.
- A method that is classifier agnostic.
- Provision of an estimate of success: given the scattering features sequence, how likely is it that the classification will be accurate?
- Extension to other types of signals than audio signals (straightforwardly extendible to other types of signals, e.g. images, video, etc.).

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A device (200) for calculating scattering features for audio signal recognition comprising:

   an interface (240) configured to receive an audio signal; and
   a processor (210) configured to:

   process the audio signal to obtain audio frames;
   calculate first order scattering features from at least one audio frame;
   calculate for the first order scattering features an estimation of whether the first order scattering features comprises sufficient information for accurate audio signal recognition; and
   calculate second order scattering features from the first order scattering features only in case the first order scattering features do not comprise sufficient information for accurate audio signal recognition.

2. The device of claim 1, wherein the processor (210) is further configured to perform audio classification based on only the first order scattering features in case the first order scattering features comprise sufficient information for accurate audio signal recognition.

3. The device of claim 2, wherein the processor (210) is further configured to perform audio classification based on the first order scattering features and at least the second order scattering features in case the first order scattering features do not comprise sufficient information for accurate audio signal recognition.

4. The device of claim 1, wherein the processor (210) is further configured to calculate the estimation by determining whether minimal energy in frequency bands, deemed important by a relevance map, exceeds a given threshold.

5. The device of claim 4, wherein a lowest possible value for the threshold is 0 and a highest possible value is 1, and the threshold lies between 0.7 and 0.9.

6. The device of claim 1, wherein the processor (210) is configured to calculate iteratively higher order scattering coefficients from scattering coefficients of an immediately lower order until the calculated set of scattering features comprise sufficient information for accurate audio signal recognition.

7. A method for calculating scattering features for audio signal recognition, the method comprising:

receiving by an interface (240) an audio signal;
processing (S610) by a processor (210) the audio signal to obtain an audio frame;
calculating (S620) by the processor (210) first order scattering features from at least one audio frame;
calculating (S630) by the processor (210) for the first order scattering features an estimation of whether the first order scattering features comprises sufficient information for accurate audio signal recognition; and
calculating (S650) by the processor (210) second order scattering features from the first order scattering features only in case the first order scattering features does not comprise sufficient information for accurate audio signal recognition.

8. The method of claim 7, further comprising performing audio classification (S660) based on only the first order scattering features in case the first order scattering features comprise sufficient information for accurate audio signal recognition.

9. The method of claim 8, further comprising performing audio classification (S660) based on the first and second order scattering features in case the first order scattering features do not comprise sufficient information for accurate audio signal recognition.

10. The method of claim 7, wherein the estimation is calculated by the processor (210) by determining whether minimal energy in frequency bands, deemed important by a relevance map, exceeds a given threshold.

11. The method of claim 10, wherein a lowest possible value for the threshold is 0 and a highest possible value is 1, and the threshold lies between 0.7 and 0.9.

12. The method of claim 7, further comprising calculating iteratively higher order scattering coefficients from scattering coefficients of an immediately lower order until the calculated set of scattering features comprise sufficient information for accurate audio signal recognition.

13. Computer program comprising program code instructions executable by a processor for implementing the method according to any one of claims 7-12.

14. Computer program product which is stored on a non-transitory computer readable medium and comprises program code instructions executable by a processor for implementing the method according to any one of claims 7-12.

Figure 1

Figure 2

330

Feature extraction

| 1st order scattering component |
| :-: |
| 332 |

| 2nd order scattering component |
| :-: |
| 334 |

Energy preservation estimator
336

Figure 3

Figure 4

Figure 5

S605 — Receive audio signal

S610 — Obtain audio frame

S620 — Calculate 1$^{st}$ order scattering features

S630 — Calculate energy preservation estimator $\beta$

S640 — $\beta \geq$ threshold?

N

S650 — 2$^{nd}$ order scattering features calculation

Y

S660 — Audio classification

Figure 6

**EP 3 309 777 A1**

Europäisches
Patentamt

European
Patent Office

Office européen
des brevets

# EUROPEAN SEARCH REPORT

Application Number

EP 16 30 6350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANDEN JOAKIM ET AL: "Deep Scattering Spectrum", IEEE TRANSACTIONS ON SIGNAL PROCESSING, IEEE SERVICE CENTER, NEW YORK, NY, US, vol. 62, no. 16, 1 August 2014 (2014-08-01), pages 4114-4128, XP011554397, ISSN: 1053-587X, DOI: 10.1109/TSP.2014.2326991 [retrieved on 2014-07-21] * abstract * * sections I, IV. C., VIII. B. and C.; table II * | 1-3,6-9, 12-14 | INV. G10L15/02 G10L25/03 G06F17/30 |
| X | XU CHEN ET AL: "Music genre classification using multiscale scattering and sparse representations", 2013 47TH ANNUAL CONFERENCE ON INFORMATION SCIENCES AND SYSTEMS (CISS), IEEE, 20 March 2013 (2013-03-20), pages 1-6, XP032497565, DOI: 10.1109/CISS.2013.6552324 ISBN: 978-1-4673-5237-6 [retrieved on 2013-07-02] * abstract * * sections II. B., VI. * | 1-3,6-9, 12-14 | |

TECHNICAL FIELDS
SEARCHED      (IPC)

G10L
G06F

-/--

The present search report has been drawn up for all claims

| Place of search | Date of completion of the search | Examiner |
|---|---|---|
| The Hague | 23 March 2017 | Hofe, Robin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 30 6350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG CHIYUAN ET AL: "A deep representation for invariance and music classification", 2014 IEEE INTERNATIONAL CONFERENCE ON ACOUSTICS, SPEECH AND SIGNAL PROCESSING (ICASSP), IEEE, 4 May 2014 (2014-05-04), pages 6984-6988, XP032618133, DOI: 10.1109/ICASSP.2014.6854954 [retrieved on 2014-07-11] * sections 4.1; table 1 * | 1-3,6-9, 12-14 | |
| A | US 2015/317990 A1 (FOUSEK PETR [CZ] ET AL) 5 November 2015 (2015-11-05) * abstract; figure 1 * * paragraphs [0020], [0021], [0039] * | 1-14 | |

TECHNICAL FIELDS
SEARCHED      (IPC)

The present search report has been drawn up for all claims

| Place of search | Date of completion of the search | Examiner |
|---|---|---|
| The Hague | 23 March 2017 | Hofe, Robin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 16 30 6350

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2017

| Patent document cited in search report | Publication date | Patent family member(s) | Publication date |
|---|---|---|---|
| US 2015317990 A1 | 05-11-2015 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. ANDÉN ; S. MALLAT.** Multiscale Scattering for Audio Classification. *ISMIR - International Society for Music Information Retrieval conference,* 2011
- **J. ANDÉN ; S. MALLAT.** Deep Scattering Spectrum. *IEEE Transactions on Signal Processing,* 2014
- **P. ATREY ; M. NAMUNU ; K. MOHAN.** Audio based event detection for multimedia surveillance. *ICASSP - IEEE International Conference on Acoustics, Speech and Signal Processing,* 2006
- **D. STOWELL ; D. GIANNOULIS ; E. BENETOS ; M. LAGRANGE ; M. PLUMBLEY.** Detection and classification of acoustic scenes and events. *IEEE Transactions on Multimedia,* 2015
- **S. MALLAT.** Group invariant scattering. *Communications on Pure and Applied Mathematics,* 2012